(19) Europäisches Patentamt
European Patent Office
Office européen des brevets

(11) EP 4 174 097 B1

(12) **EUROPEAN PATENT SPECIFICATION**

(45) Date of publication and mention of the grant of the patent:
**18.03.2026 Bulletin 2026/12**

(21) Application number: **21205231.0**

(22) Date of filing: **28.10.2021**

(51) International Patent Classification (IPC):
***C08F 220/18*** *(2006.01)* ***C08F 2/26*** *(2006.01)*
***C08F 2/30*** *(2006.01)* ***C09J 7/38*** *(2018.01)*

(52) Cooperative Patent Classification (CPC):
(C-Sets available)
**C08F 220/1808; C08F 2/24; C09J 7/385** (Cont.)

(54) **ACRYLIC EMULSION-BASED POLYMER AND PRESSURE-SENSITIVE ADHESIVE COMPOSITIONS COMPRISING THE SAME**

POLYMER AUF BASIS VON ACRYLEMULSION UND HAFTKLEBERZUSAMMENSETZUNGEN DAMIT

POLYMÈRE À BASE D'ÉMULSION ACRYLIQUE ET COMPOSITIONS ADHÉSIVES SENSIBLES À LA PRESSION LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2023 Bulletin 2023/18**

(73) Proprietor: **Nitto Belgium NV**
**3600 Genk (BE)**

(72) Inventors:
- **SAK, Iris**
  **3600 Genk (BE)**
- **JASINSKI, Florent**
  **3600 Genk (BE)**

(74) Representative: **Grünecker Patent- und Rechtsanwälte PartG mbB**
**Leopoldstraße 4**
**80802 München (DE)**

(56) References cited:
**CN-A- 106 519 106**
**CN-A- 107 602 760**
**US-A1- 2013 052 457**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08F 220/1808, C08F 220/14, C08F 220/06,
C08F 220/06, C08F 230/085

## Description

### FIELD OF INVENTION

The present invention relates to an acrylic emulsion-based polymer which enables the provision of pressure-sensitive adhesives with excellent adhesion and peel retention properties under high humidity conditions. In addition, pressure-sensitive adhesive tapes and multilayer laminates comprising said adhesive composition, as well as uses of said adhesive compositions are described.

Further aspects of the present invention include methods of manufacturing of the acrylic emulsion-based polymer.

### BACKGROUND OF THE INVENTION

Pressure-sensitive adhesive (PSA) compositions are extensively employed in the industry in the preparation of adhesive tapes, for bonding structural components, or in foam-based multilayer laminates, for example, which may be used as insulation, shock absorption, cushioning and/or noise reduction materials in a wide variety of applications, such as in the transport sector (e.g., automotive or aircraft interior or exterior, etc.), in home domestic appliances (e.g., white goods) or buildings (e.g., sound absorption panels for walls or ceilings).

For a large number of applications, such as automotive body parts, for example, it is desirable that the pressure-sensitive adhesive composition exhibits high adhesion on engineered plastic surfaces (such as e.g. polypropylene surfaces with a relatively low surface free energy). A high adhesion should be ideally maintained both in interior and exterior applications. For instance, it is desirable that the PSA composition maintains sufficient adhesion under high humidity conditions (e.g. more than 95% RH).

Simultaneously, there is a growing demand for environmentally sustainable PSA materials and production methods which avoid or at least reduce the use of organic solvents. In this respect, PSA production methods based on emulsion polymerization in aqueous reaction media are preferred as they enable environmentally friendly production without elaborate and/or expensive equipment.

As opposed to organic solvent-based adhesives, UV-curable adhesives or hotmelt adhesives, conventional emulsion-based adhesive compositions employ ionic surfactants in their structure to stabilize the polymer emulsion in the adhesive bulk. However, such surfactants tend to severely compromise adhesive strength retention under high humidity conditions. Surfactants are amphiphilic molecules with hydrophilic and a lipophilic moieties that are soluble in water. If an emulsion-based PSA is placed in a humid environment, the surfactant can thus migrate through the adhesive bulk to the interface between the adhesive and the substrate and renders the interface water-sensitive. A water film can then be formed that can disrupt the interfacial interactions responsible for the adhesive behavior of the PSA composition or tape, whereupon a loss of adhesion on the substrate under high humidity conditions is often observed. Exemplary water-dispersible acrylic PSA compositions including reactive surfactants are disclosed in CN 107602760 A, CN 106519106 A and US 2013/0052457 A1.

US 2014/0302314 A1 discloses a water-dispersible acrylic PSA composition which can form a pressure-sensitive adhesive layer excellent in antistatic property, repeeling property and appearance. The adhesive composition is obtained by emulsion polymerization using an anionic reactive emulsifier containing a radical polymerizable functional group in the molecule to improve the low staining property, and a non-ionic non-reactive surfactant is added after the polymerization process.

CN 106939062 A is concerned with the provision of an emulsion-based polyacrylate adhesive with improved alkali resistance and chemical stability, and discloses a polymerization process which involves the addition of a reactive emulsifier and a non-ionic non-reactive emulsifier.

CN 112724884 A, CN 110606910 A and CN 110437360 A disclose veneer splicing and wood glues based on styrene-acrylic PSA compositions prepared by emulsion polymerization, during which a reactive emulsifier and a non-reactive anionic or non-reactive non-ionic emulsifier are added.

However, none of these publications address the problem of poor peel adhesion in a high humidity environment.

Therefore, it remains desirable to provide an adhesive composition that maintains high adhesion and peel retention properties on engineered plastic surfaces under high humidity conditions (e.g. more than 95% RH), and which may still be produced in an environmentally sustainable and simple manner.

In addition, it is desirable to attain these properties without compromising the capability of the adhesive composition to withstand high shear forces without coagulation or formation of gel particles.

### SUMMARY OF THE INVENTION

The present invention solves these problems with the subject matter of the claims as defined herein. Further

advantages of the present invention will be further explained in detail in the section below.

According to a first aspect, the present invention relates to an acrylic emulsion-based polymer obtainable by emulsion polymerisation of one or more acrylate monomers in the presence of an anionic reactive surfactant and a non-ionic reactive surfactant, so that the surfactants are covalently bound to the surface of the acrylic emulsion-based polymer via their reactive moieties, wherein a total content of the anionic reactive surfactant and the non-ionic reactive surfactant ranges from 1.0 to 10 parts by weight relative to 100 parts by weight of all acrylate monomers constituting the acrylic emulsion-based polymer; and wherein the one or more acrylate monomers comprise: a) an alkyl (meth)acrylate having an alkyl group with 2 to 14 carbon atoms, b) at least one $\alpha,\beta$-ethylenically unsaturated, carboxyl group-containing monomer other than component a), selected from an $\alpha,\beta$-ethylenically unsaturated carboxylic acid and an alkyl (meth)acrylate having an alkyl group with less than 4 carbon atoms, and c) an alkoxysilyl group-containing monomer; and wherein each of the anionic reactive surfactant and the non-ionic reactive surfactant comprises a hydrophobic moiety, a hydrophilic moiety and the reactive moiety. Advantageously, the combination of surfactants simultaneously ensures the stability of the polymer particles against coalescence or sedimentation and reduces the sensitivity of the polymer towards water under high humidity and elevated temperature conditions.

In a second aspect, the present invention relates to an acrylic pressure-sensitive adhesive composition comprising an acrylic emulsion-based polymer according to the first aspect.

In a third aspect, the present invention relates to the use of the acrylic pressure-sensitive adhesive composition according to the second aspect for application on engineering plastic surfaces.

In a fourth aspect, the present invention relates to a method of manufacturing a pressure-sensitive adhesive composition comprising an acrylic emulsion-based polymer, comprising a step of subjecting a monomer mixture comprising at least one acrylate monomer to emulsion polymerisation in the presence of an anionic reactive surfactant and a non-ionic reactive surfactant so as to covalently bond at least a part of both surfactants to the surface of the acrylic emulsion-based polymer via their reactive moieties, wherein a total content of the anionic reactive surfactant and the non-ionic reactive surfactant ranges from 1.0 to 10 parts by weight relative to 100 parts by weight of all acrylate monomers constituting the acrylic emulsion-based polymer; and wherein the one or more acrylate monomers comprise: a) an alkyl (meth)acrylate having an alkyl group with 2 to 14 carbon atoms, b) at least one $\alpha,\beta$-ethylenically unsaturated, carboxyl group-containing monomer other than component a), and c) an alkoxysilyl group-containing monomer.

In a fifth aspect, a pressure-sensitive adhesive tape is disclosed, comprising an adhesive layer on at least one surface of a carrier layer and an optional release liner provided on the adhesive layer, wherein the adhesive layer comprises the acrylic pressure-sensitive adhesive composition according to the second aspect.

Preferred embodiments of the acrylic emulsion-based polymer, the pressure-sensitive adhesive composition according to the present invention and other aspects of the present invention are described in the following description and the claims.

## BRIEF DESCRIPTION OF THE DRAWINGS

FIG. 1 is a schematic representation of a pressure-sensitive adhesive tape.

FIG. 2 schematically depicts an exemplary double-sided adhesive tape.

FIG. 3 illustrates the 90° peel adhesion force test ((i): front view, (ii): side view) used for the evaluation of exemplary double-sided adhesive tapes.

FIG. 4A depicts the procedure to measure peel retention of exemplary double-sided adhesive tapes under high humidity conditions.

FIG. 4B illustrates how the double-sided adhesive tape is maintained at a 90° angle with the substrate in the condensation chamber to expose the adhesive layer exposed to humidity and condensation.

FIG. 5 illustrates the process for evaluating mechanical stability under shear.

## DETAILED DESCRIPTION OF THE INVENTION

For a more complete understanding of the present invention, reference is now made to the following description of the illustrative embodiments thereof:

Acrylic Emulsion-Based Polymer

In a first embodiment, the present invention relates to an acrylic emulsion-based polymer obtainable by emulsion polymerization of one or more acrylate monomers in the presence of an anionic reactive surfactant and a non-ionic reactive surfactant, so that the surfactants are covalently bound to the surface of the acrylic emulsion-based polymer via their

reactive moieties, wherein a total content of the anionic reactive surfactant and the non-ionic reactive surfactant ranges from 1.0 to 10 parts by weight relative to 100 parts by weight of all acrylate monomers constituting the acrylic emulsion-based polymer; and wherein the one or more acrylate monomers comprise: a) an alkyl (meth)acrylate having an alkyl group with 2 to 14 carbon atoms, b) at least one α,β-ethylenically unsaturated, carboxyl group-containing monomer other than component a), selected from an α,β-ethylenically unsaturated carboxylic acid and an alkyl (meth)acrylate having an alkyl group with less than 4 carbon atoms, and c) an alkoxysilyl group-containing monomer; and wherein each of the anionic reactive surfactant and the non-ionic reactive surfactant comprises a hydrophobic moiety, a hydrophilic moiety and the reactive moiety and c) an alkoxysilyl group-containing monomer.

The term "reactive surfactant", as used herein, denotes a surfactant which is not only capable of being adsorbed onto the surface of the polymer particles but covalently binds to the acrylic polymer chain via a reactive moiety, typically through a free radical mechanism. Once covalently bound to the surface of the latex (i.e. dispersed polymer particle), the surfactant molecules are no longer reactive and firmly bound to the polymer. However, it is preferred that the anionic and non-ionic reactive surfactants used in the present invention are not incorporated into the polymer chain as co-monomers and hence do not act as what is known as "surfmers", although the emulsion polymerization process is conducted in their presence. Accordingly, the surfactants do not substantially compromise the adhesion performance of the acrylic polymer and stabilize the polymer emulsion while not being susceptible to migration through the adhesive bulk to the interface between the adhesive and the substrate, and thus efficiently ensure excellent peel retention in a high humidity environment.

The anionic reactive surfactant enhances the stability of the polymer particle against coalescence or sedimentation and reacts with the growing polymer chain during the polymerization. The anionic surfactant is then part of the polymer backbone and is unable to migrate under high humidity. However, it is possible that such a surfactant does not fully react with the growing polymer chain, leaving "free" surfactant still able to migrate under humidity. Due to its reactivity and typically lower hydrophilicity compared to the anionic reactive surfactant, a non-ionic reactive surfactant is therefore added, which further stabilizes the polymer latex and further reduces the water-sensitivity of the adhesive bulk. Such non-ionic surfactants, even not fully reacted with the growing polymer chain, are non-migrating species because of the low hydrophilicity. For an ideal compromise between obtaining a PSA composition that maintains peel retention under high humidity and an excellent mechanical stability under shear, the present invention therefore employs a combination of anionic reactive surfactant and non-ionic reactive surfactant. Against this background, the nature of the anionic and non-ionic reactive surfactants is not particularly limited as long as the aforementioned functions are exerted. Nevertheless, preferred embodiments of surfactants will be further described in the following section.

The reactive moieties of the anionic and non-ionic reactive surfactants used in the emulsion polymerization according to present invention preferably represent ethylenically unsaturated bonds, which are further preferably independently selected from maleic double bonds or terminal olefins, wherein among the latter, an allyl and/or a methallyl group is particularly preferred. Each surfactant may comprise a plurality of such groups. While not being limited thereto, suitable reactive surfactants comprising terminal olefins are disclosed in US 2014/114006 A1, US 2013/047892 A1 and JP 2596441 B2, for example.

Each of the anionic reactive surfactant and the non-ionic reactive surfactant is an amphiphilic molecule comprising a hydrophobic moiety, a hydrophilic moiety and the reactive moiety.

Examples of the hydrophobic moiety include, but are not limited to a hydrocarbon group, a fluorocarbon group, a siloxane group, or combinations thereof.

The hydrophilic moiety preferably comprises a poly(alkylene oxide) group, a poly(alkylalkylene oxide) group, a poly(arylalkylene oxide) group, or combinations thereof. Poly(alkylene oxide) groups and especially poly(ethylene oxide) groups are particularly preferred.

In preferred embodiments, the anionic reactive surfactant comprises an anionic group selected from a sulfate group, a sulfonate group, a phosphate ester group and a carboxylate group.

An example of an anionic reactive surfactant with a maleic group is shown in the below General Formula (1):

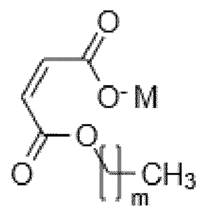

(1)

In General Formula (1), m is an integer of from 3 to 100 and M represents a cationic group and is preferably an

alkali metal cation or an ammonium cation.

Further preferred examples of anionic reactive surfactants are shown in the below General Formulae (2-1) and (2-2):

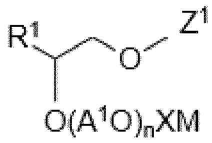

(2-1)

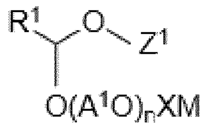

(2-2)

In General Formulae (2-1) and (2-2), $R^1$ represents a $C_6$-$C_{30}$ alkyl group or a $C_6$-$C_{60}$ aryl group; n is an integer of from 1 to 200; $A^1$ is an $C_1$-$C_5$ alkylene group, a $C_2$-$C_8$ alkylalkylene group or an $C_7$-$C_{12}$ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

Other preferred examples of anionic reactive surfactants include polyoxyalkylene alkylphenyl ethers with an ethylenically unsaturated bond. Examples thereof include, but are not limited to compounds according to General Formula (3):

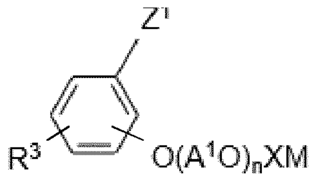

(3)

In General Formula (3), $R^3$ represents a $C_6$-$C_{50}$ alkyl group or a $C_6$-$C_{60}$ aryl group; n is an integer of from 1 to 200; $A^1$ is an $C_1$-$C_5$ alkylene group, a $C_2$-$C_8$ alkylalkylene group or an $C_7$-$C_{12}$ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

In the above formulae, $Z^1$ is selected from any of the below residues (3-1) to (3-7), wherein $R^2$ as well as $R^{2-1}$ and $R^{2-2}$ (independently) represent a $C_1$-$C_3$ alkyl group, preferably a methyl group:

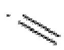

(3-1)

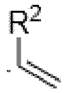

(3-2)

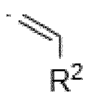

(3-3)

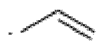

(3-4)

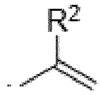

(3-5)

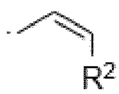

(3-6)

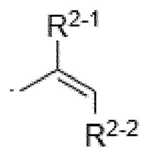

(3-7)

In preferred embodiments, the non-ionic reactive surfactant is represented by any of the below General Formulae (4-1) or (4-2):

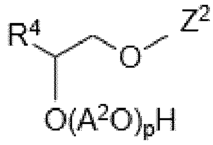

(4-1)

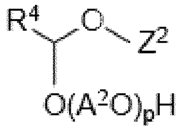

(4-2)

In General Formulae (4-1) and (4-2), $R^4$ represents a $C_6$-$C_{30}$ alkyl group or a $C_6$-$C_{60}$ aryl group; p is an integer of from 1 to 200; and $A^2$ is a $C_1$-$C_5$ alkylene group, a $C_2$-$C_8$ alkylalkylene group or a $C_7$-$C_{12}$ arylalkylene group.

An alternatively preferred example of a non-ionic surfactant is shown in General Formula (5):

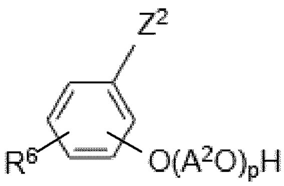

(5)

Herein, $R^6$ represents a $C_6$-$C_{50}$ alkyl group or a $C_6$-$C_{60}$ aryl group; p is an integer of from 1 to 200; and $A^2$ is an $C_1$-$C_5$ alkylene group, a $C_2$-$C_8$ alkylalkylene group or an $C_7$-$C_{12}$ arylalkylene group.

In the aforementioned general formulae, $Z^2$ is selected from any of the below residues (6-1) to (6-7), wherein $R^5$ as well as $R^{5-1}$ and $R^{5-2}$ (independently) represent a $C_1$-$C_3$ alkyl group, preferably a methyl group:

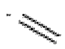 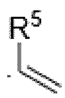 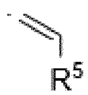 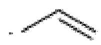 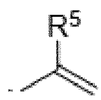 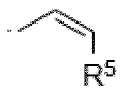 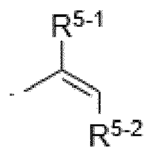

(6-1) (6-2) (6-3) (6-4) (6-5) (6-6) (6-7)

The total content of the anionic reactive surfactant and the non-ionic reactive surfactant ranges from 1.0 to 10 parts by weight relative to 100 parts by weight of all acrylate monomers constituting the acrylic emulsion-based polymer, preferably from 1.0 to 6.0 parts by weight, more preferably from 1.0 to 5.0 parts per weight, and especially preferably from 2.0 to 4.5 parts by weight.

For ensuring further improved colloidal stability, the anionic reactive surfactant is preferably used in a content of 0.05 to 5 parts by weight relative to 100 parts by weight of all acrylate monomers constituting the acrylic emulsion-based polymer, more preferably from 0.5 to 2.5 parts per weight, and especially preferably from 0.7 to 1.5 parts by weight. Independently or in combination, for further improved reduction of hydrophilic migratory species in the adhesive, the non-ionic reactive surfactant is preferably used in a content of 0.1 to 5.0 parts by weight relative to 100 parts by weight of all acrylate monomers constituting the acrylic emulsion-based polymer, more preferably from 0.6 to 3.0 parts per weight, and especially preferably from 0.8 to 2.0 parts by weight.

In terms of particularly improved peel retention under high humidity conditions and simultaneously a high resistance to shear without coagulation and formation of gel particles, it is preferred that a weight ratio of anionic reactive surfactant to non-ionic reactive surfactant is within the range of from 5:95 to 95:5, more preferably from 15:85 to 80:20, further preferably from 20:80 to 65:35, and especially preferably from 30:70 to 60:40.

The (co-)monomers constituting the acrylic emulsion-based polymer are not particularly limited and may be suitably selected by the skilled artisan depending on the desired properties.

For the preparation of an adhesive composition with favorably high adhesion on different types of substrates and particularly excellent properties for the use in so-called foam complexes, wherein the adhesive is being applied in contact with a foam sheet, the one or more acrylate monomers subjected to emulsion polymerization in the presence of the anionic reactive surfactant and the non-ionic reactive surfactant comprise: a) an alkyl (meth)acrylate having an alkyl group with 2 to 14 carbon atoms; b) at least one $\alpha,\beta$-ethylenically unsaturated, carboxyl group-containing monomer other than component a), which is preferably selected from at least methyl methacrylate, acrylic acid, methacrylic acid, and combinations thereof; and c) an alkoxysilyl group-containing monomer preferably selected from an alkoxysilyl group-containing acrylate monomer or an alkoxysilyl-group containing vinyl monomer.

Monomer component a) is an alkyl (meth)acrylate having an alkyl group with 2 to 14 carbon atoms, preferably with 2 to 12 carbon atoms and more preferably with 4 to 10 carbon atoms. Without being limited thereto, examples thereof include n-butyl (meth)acrylate, isobutyl (meth)acrylate, n-hexyl (meth)acrylate, 2-ethylhexyl (meth)acrylate, and 2-ethylhexyl (meth)acrylate, cyclohexyl (meth)acrylate, n-octyl (meth)acrylate, isooctyl (meth)acrylate, nonyl (meth)acrylate, isononyl (meth)acrylate, undecyl (meth)acrylate, isodecyl (meth)acrylate, undecyl (meth)acrylate, and the like. Further preferred examples include n-butyl (meth)acrylate and 2-ethylhexyl (meth)acrylate, of which 2-ethylhexyl (meth) acrylate is particularly preferred. Unless otherwise indicated, it will be understood that any term containing parentheses refers, alternatively, to the whole term as if no parentheses were present and the term without that contained in the

parentheses, and combinations of each alternative. Thus, the term "(meth)acrylate" means acrylate, methacrylate, or mixtures thereof, and, similarly, the term "(meth)acrylic" generally refers to any of acrylic, methacrylic, and mixtures thereof.

The amount of monomer component a) is not particularly limited. However, to ensure a soft polymer matrix and to improve contact efficiency, component a) is preferably used as main monomer at a content of more than 50 parts by weight, more preferably between 55 to 98 parts by weight, such as 60 to 97 parts by weight with respect to 100 parts by weight of all acrylate monomers constituting the acrylic emulsion-based polymer. In embodiments, component a) may be present in an amount of from 60 to 92 parts by weight of the total amount of monomer components.

Monomer component b) is at least one $\alpha,\beta$-ethylenically unsaturated, carboxyl group-containing monomer other than that selected for component a), and is selected from $\alpha,\beta$-ethylenically unsaturated carboxylic acids (acrylic acid, methacrylic acid, beta-acryloxypropionic acid, ethacrylic acid, $\alpha$-chloroacrylic acid, $\alpha$-vinylacrylic acid, crotonic acid, $\alpha$-phenylacrylic acid, cinnamic acid, chlorocinnamic acid, $\beta$-styrylacrylic acid, maleic acid, itaconic acid, and citraconic acid) may be mentioned as examples. Component b) comprises - alternatively or in addition - at least one alkyl (meth)acrylate having an alkyl group with less than 4 carbon atoms, more preferably from 1 to 3 carbon atoms. As examples of the latter, methyl (meth)acrylate, ethyl (meth)acrylate, n-propyl (meth)acrylate, and isopropyl (meth)acrylate may be mentioned. Methyl (meth)acrylate is particularly preferred as it improves stress dissipation during debonding due to the presence of methyl group in the polymer backbone.

Although the (total) amount of monomer component b) is not particularly limited, a (total) amount of 2 to 40 parts by weight with respect to 100 parts by weight of the total amount of monomer components is typically employed. For a favourable hardness of the polymer matrix, especially preferred (total) amounts range from 2 to 20 parts by weight, such as from 3 to 15 parts by weight or from 4 to 10 parts by weight.

From the viewpoint of improved stress dissipation during debonding, it is preferred that component b) comprises: b1) an alkyl (meth)acrylate having an alkyl group with from 1 to 3 carbon atoms, and b2) at least one $\alpha,\beta$-ethylenically unsaturated carboxylic acid selected from acrylic acid and methacrylic acid, preferably both. In this case, it is preferred that the weight ratio of components b1) and b2) is from 1:1 to 10:1, more preferably from 2:1 to 5:1.

Component c) is an alkoxysilyl group-containing monomer, a functional monomer which enables crosslinking by hydrolysis and condensation in presence of atmospheric moisture. Component c) is preferably selected from an alkoxysilyl group-containing acrylate monomer or an alkoxysilyl-group containing vinyl monomer, among which alkoxysilyl group-containing acrylate monomers are especially preferred. Examples of the alkoxysilyl-group containing vinyl monomer include vinyltrialkoxysilanes, vinylalkyldialkoxysilanes, and the like. As specific examples of alkoxysilyl group-containing acrylate monomers, (meth)acyloyloxyalkyl-trialkoxysilanes (e.g. (meth)acryloyloxymethyl-trimethoxysilane, (meth)acryloyloxymethyl-triethoxysilane, 2-(meth)acryloyloxyethyl-trimethoxysilane, 2-(meth)acryloyloxyethyl-triethoxysilane, 3-(meth)acryloyloxypropyl-trimethoxysilane (MAPTMS), 3-(meth)acryloyloxypropyl-triethoxysilane, 3-(meth)acryloyloxypropyl-tripropoxysilane, 3-(meth)acryloyloxypropyl-triisopropoxysilane), (meth) acryloyloxyalkyl-alkyldialkoxysilanes (e.g. such as (meth)acryloyloxymethyl-methyldimethoxysilane) and (meth)acryloyloxyalkyl-dialkyl(mono)alkoxysilanes or the like may be mentioned.

The amount of component c) is not particularly limited, and may be between 0.001 to 1 parts by weight with respect to 100 parts by weight of all acrylate monomers constituting the acrylic emulsion-based polymer, for example, such as from 0.005 to 0.7 parts by weight.

In preferred embodiments, a chain transfer agent is added in an amount of 0.001 to 0.3 parts by weight with respect to 100 parts by weight of all acrylate monomers constituting the acrylic emulsion-based polymer, preferably between 0.01 to 0.1 parts by weight. The aforementioned ranges are preferred when targeting a suitable weight-average molecular weight for an improved balance of adhesion properties, debonding performance and mechanical resistance. In this respect, it may be preferable that the acrylic emulsion-based polymer has a weight-average molecular weight ($M_w$) in the range of more than 200 kDa and 1000 kDa or less (as measured by gel permeation chromatography (GPC)). In preferred embodiments, the acrylic polymer has a number-average molecular weight ($M_n$) of less than 800 kDa, more preferably in the range of 50 to 500 kDa, further preferably from 60 to 300 kDa, or especially preferably from 100 to 200 kDa, as measured by gel permeation chromatography (GPC)/size exclusion chromatography (SEC).

The chain transfer agent is not particularly limited and typically selected from one or more thiol compounds including monofunctional and polyfunctional thiols. Monofunctional thiols include, but are not limited to, propyl mercaptan, butyl mercaptan, hexyl mercaptan, octyl mercaptan, n-dodecyl mercaptan, thioglycollic acid, mercaptopropionic acid, alkyl thioglycollates, mercaptoethanol, mercaptoundecanoic acid, thiolactic acid, and thiobutyric acid, among which n-dodecyl mercaptan is preferred. Examples of polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; and octafunctional thiols such as tripentaerythritol octa (3-mercaptopropionate) or tripentaerythritol octathioglycollate.

The acrylic emulsion-based polymer is obtained by subjecting the one or more acrylate-based monomers to an emulsion-based polymerization using water as dispersion medium in the presence of the anionic reactive surfactant and the non-ionic reactive surfactant.

Depending on the polymerization conditions, polymerization additives (such as polymerization initiators, stabilizers and/or rheology modifiers) may be suitably added to the composition.

Examples of the polymerization initiator include, but are not limited to an azo initiator (such as 2,2'-azobis[N-(2-carboxyethyl)-2-methylpropionamidine]hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl) propane] dihydrochloride, 2,2'-azobis(N, N'-dimethyleneisobutylamidine) dihydrochloride, and the like); a peroxide initiator (e.g., persulfates such as potassium persulfate and ammonium persulfate; benzoyl peroxide, t-butyl hydroperoxide, di-t-butyl peroxide, t-butyl peroxybenzoate, hydrogen peroxide, and the like); and a redox initiator in which a peroxide and a reducing agent are combined (e.g., a combination of peroxide and ascorbic acid, a combination of peroxide and an iron (II) salt, a combination of persulfate and sodium bisulfite, and the like).

The amount of a polymerization initiator can be suitably selected by the skilled artisan depending on the type of initiator and the monomer composition, and will be usually about 0.01 to 1 parts by weight with respect to 100 parts by weight of the total amount of monomer components, for example.

The polydispersity index (PDI) of the acrylic polymer, defined as the ratio of the weight-average molecular weight ($M_w$) to the number-average molecular weight ($M_n$), is preferably between 1.5 and 4.5, especially preferably between 2.0 and 4.0.

If particularly enhanced adhesion to foamed substrates is desired, the acrylic emulsion-based polymer according to the present invention preferably exhibits a glass transition temperature $T_g$ of lower than -20°C, more preferably between -80°C to -30°C, further preferably between -75 to -40°C, especially preferably from -70°C to -48°C, which may be suitably measured by differential scanning calorimetry (DSC).

Acrylic Pressure-Sensitive Adhesive Composition

In a second embodiment, the present invention relates to an acrylic pressure-sensitive adhesive (PSA) composition comprising an acrylic emulsion-based polymer according to the first embodiment described above.

In some instances, emulsion-based polymers may require the addition of a rheology modifier (after polymerization) to increase the viscosity of the adhesive. Examples of such rheology modifiers include, but are not limited to alkali swellable emulsions (ASE) and hydrophobically modified variants thereof. In preferred embodiments, rheology modifiers are mixed with the emulsion-based acrylic polymer at a weight ratio of 1:50 to 1:200, preferably at a weight ratio of 1:70 to 1:150.

Further optional additives that can be contained in the acrylic PSA composition include viscosity modifiers (thickeners, etc.), leveling agents, release modifiers, tackifiers, plasticizers, softeners, fillers, colorants (pigments, dyes, etc.), antistatic agents, preservatives, anti-aging agents, ultraviolet absorbers, antioxidants and light stabilizers, for example.

In preferred embodiments, the acrylic pressure-sensitive adhesive composition according to the present invention preferably contains a tackifier in an amount of 0.15 wt.-% or less, such as 0.1 wt.-% or less, 0.05 wt.-% or less, or 0.01 wt.-% or less based on the total weight of the acrylic polymer. Most preferably, the acrylic pressure-sensitive adhesive composition does not contain a tackifier at all. Examples of tackifiers include rosin-based tackifier resins (e.g., gum rosin, wood rosin, tall oil rosin, stabilized rosin obtained by disproportionating or hydrogenating the rosin), and polymerized rosin), rosin derivative tackifier resins (e.g., esters of rosin-based resins, phenol-modified products of rosin-based resins), petroleum-based tackifier resins (e.g. aliphatic petroleum resins, aromatic petroleum resins, copolymer petroleum resins, alicyclic petroleum resins, and hydrides thereof), terpene-based tackifier resins (e.g., $\alpha$-pinene resin, $\beta$-pinene resin, aromatic-modified terpene resin, and terpene phenol resin), phenol-based tackifier resins, ketone-based tackifier resins (e.g., ketone-based resins obtained by condensing ketones (for example, aliphatic ketones such as methyl ethyl ketone, methyl isobutyl ketone, and acetophenone; alicyclic ketones such as cyclohexanone and methylcyclohexanone) and formaldehyde), and the like. It is also preferred that the content of plasticizer in the PSA composition is less than 5 wt.-% based on the total weight of the pressure-sensitive adhesive, more preferably less than 3 wt.-%, such as 1 wt.-% or less, 0.5 wt.-% or less, or 0.05 wt.-% or less. Especially preferably, the use of plasticizer in the acrylic PSA composition is entirely omitted. Plasticizers, as defined herein, may include hydrocarbon oil components (such as aliphatic/paraffinic components, aromatic components and naphthenic components, as well as mixtures thereof), adipic ester plasticizers, as well as plasticizers selected among propylene oligomers, butene oligomers, isoprene oligomers, hydrogenated isoprene oligomers, butadiene oligomers, benzoic esters and vegetable and animal oils and derivatives thereof, for example.

Under aspects of improved stress dissipation and limitation of creep, the acrylic pressure-sensitive adhesive composition preferably exhibits a gel content in the range of from 15 to 45%, further preferably from 20 to 40%. The gel content may be suitably determined by methods known to the skilled artisan.

In a third embodiment, the present invention relates to the use of the acrylic pressure-sensitive adhesive composition according to the second embodiment described above for application on engineering plastic surfaces.

The term "engineering plastics", as used herein, denotes a group of plastics which distinguish themselves from so-called commodity plastics by demonstrating a greatly improved mechanical behaviour over a wide range of temperatures, load and/or time. Examples thereof include, but are not limited to acrylonitrile butadiene styrene (ABS), polyamide (PA), polybutylene terephthalate (PBT), polycarbonate (PC), polyetheretherketone (PEEK), polyetherketoneketone (PEKK), polyetherketone (PEK), polyketone (PK), polyethylene terephthalate (PET), polyimides, polyoxymethylene plastic (POM / Acetal), polypropylene (PP)/filler (e.g. talc) composites, polyphenylene sulfide (PPS), polyphenylene oxide (PPO), polysulphone (PSU), polytetrafluoroethylene (PTFE / Teflon), or poly(methyl methacrylate) (PMMA). Particularly favourable performance is observed upon adhesion on engineering plastics commonly employed in the automotive sector, such as acrylonitrile butadiene styrene (ABS), polybutylene terephthalate (PBT) and polypropylene (PP)/filler (e.g. talc) composites.

The acrylic pressure-sensitive adhesive composition also displays particularly favorable properties in terms of adhesion and peel retention in a high humidity environment when being applied to engineering plastic surfaces with low surface free energies (e.g. a surface free energy (SFE) at 20 °C of 40 mN/m or lower, such as 38 mN/m or lower, 34 mN/m or lower, or 32 mN/m or lower).

Methods of Manufacturing

In a fourth embodiment, the present invention relates to a method of manufacturing an acrylic emulsion-based polymer or a pressure-sensitive adhesive composition comprising said acrylic emulsion-based polymer, comprising a step of subjecting a monomer mixture comprising at least one acrylate monomer to emulsion polymerization in the presence of an anionic reactive surfactant and a non-ionic reactive surfactant so as to covalently bond at least a part of both surfactants to the surface of the acrylic emulsion-based polymer via their reactive moieties, wherein a total content of the anionic reactive surfactant and the non-ionic reactive surfactant ranges from 1.0 to 10 parts by weight relative to 100 parts by weight of all acrylate monomers constituting the acrylic emulsion-based polymer; and wherein the one or more acrylate monomers comprise: a) an alkyl (meth)acrylate having an alkyl group with 2 to 14 carbon atoms, b) at least one $\alpha,\beta$-ethylenically unsaturated, carboxyl group-containing monomer other than component a), selected from an $\alpha,\beta$-ethylenically unsaturated carboxylic acid and an alkyl (meth)acrylate having an alkyl group with less than 4 carbon atoms, and c) an alkoxysilyl group-containing monomer; and wherein each of the anionic reactive surfactant and the non-ionic reactive surfactant comprises a hydrophobic moiety, a hydrophilic moiety and the reactive moiety. Notably, the fourth embodiment may be freely combined with the first and second embodiments described above.

Emulsion polymerization may be generally brought about by methods known in the art, for example by heating the compositions described in conjunction with the first embodiment to 20 to 100 °C, typically to 40 to 80 °C. In this respect, the presence of initiators that, on exposure to heat, generate free radicals which initiate (co)polymerization of the monomer mixture, is preferable. Examples thereof are mentioned above in conjunction with the first embodiment.

The anionic reactive surfactant and the non-ionic reactive surfactant are added to the monomer mixture comprising at least one acrylate monomer before or during emulsion polymerization to enhance the stability of the polymer particles against coalescence or sedimentation and to be able to react with the growing polymer chain during the polymerization.

In an emulsion-based polymerization process, the monomer phase is typically not miscible with the aqueous phase, so the monomer phase needs to be homogenized to create monomer droplets and micelles.

After emulsion polymerization, an acid or a base may be added to adjust the pH of the polymer. Bases, such as ammonia, are preferred stabilizers since they deprotonate the carboxylic functions of component b) and stabilize the resulting particles against coalescence.

Pressure-Sensitive Adhesive Tapes

In a fifth embodiment, the invention relates to a pressure-sensitive adhesive (PSA) tape comprising an adhesive layer on at least one surface of a carrier layer and an optional release liner provided on the adhesive layer, wherein the adhesive layer comprises the acrylic emulsion-based polymer according to the first embodiment or the pressure-sensitive adhesive composition according to the second embodiment described above.

Accordingly, the PSA tape may be a single-sided adhesive tape, wherein the acrylic emulsion-based polymer according to the first embodiment or the pressure-sensitive adhesive composition according to the second embodiment may be provided on only one or on both sides of a carrier layer, as is illustrated in Fig. 1, or a double-sided adhesive tape, wherein the acrylic emulsion-based polymer according to the first embodiment or the pressure-sensitive adhesive composition according to the second embodiment is provided on both sides of a carrier layer.

The carrier layer is not particularly limited and may be a paper or preferably a film composed of materials known in

the art, such as polyethylene (PE), polypropylene (PP), polyether sulphones, polyamides, polyimides, polyetherimides, polyesters, polyphenyl sulphides, polyamideimides, polyetherimides, polymethacrylates, styrene-based films, polycarbonates, polyether ketones, polyaryls, polyurethanes, polyacrylates, polybutyrals, polyethylene-vinyl acetates, polyethylene naphthylates, fluorinated polymers and combinations thereof. The carrier layer may also incorporate nonwovens or fabrics. Foam carriers may also be mentioned as exemplary carrier layers. Examples of the latter include, but are not limited are in particular foams based on homopolymers and copolymers of ethylene (e.g. PE), ethylene-vinyl acetate copolymers (EVA), polyvinyl acetates, polypropylenes, ethylene-propylene-diene rubber (EPDM), thermoplastic elastomers based on styrene block copolymers, polyurethanes based on aromatic and aliphatic diisocyanates, polyvinyl chloride (PVC), polychloroprenes, natural rubber, acrylate copolymers, and combinations thereof.

Exemplary PSA tapes may also include multilayer PSA tapes, wherein the acrylic pressure-sensitive adhesive composition according to the first embodiment is provided between two carrier layers, wherein one of the carrier layers may be a foam carrier layer.

In a preferred embodiment, the PSA tape is a double-sided PSA tape with the adhesive layer comprising the PSA composition according to the first embodiment on at least one surface of the carrier layer, preferably on both surfaces of the carrier layer. An example thereof is illustrated in Fig. 2, wherein a first adhesive layer (12) is provided on one surface of a carrier layer (13) and a second adhesive layer (14) on the other surface of the carrier layer (13), with the optional release liner (11) being provided in contact with one of the adhesive layers.

Conventional release liners known in the art may be used (e.g. based on polymeric films, papers, woven materials and/or metal foils) on any outer PSA layer surface.

The thicknesses of each of the layers are not particularly limited and may be suitably adjusted by the skilled artisan depending on the choice of materials and the purpose of application.

It will be understood that the preferred features of the first to fifth embodiments may be freely combined in any combination, except for combinations where at least some of the features are mutually exclusive.

## EXAMPLES

### Preparation of Pressure-Sensitive Adhesive Compositions

Seven acrylic emulsion-based PSA compositions were formulated and processed into PSA tapes (Examples 1 to 5 and Comparative Examples 1 and 2). The formulations are described in the following Table 1.

TABLE 1: Polymer Compositions for Exemplary PSA

| | | **Content** |
|---|---|---|
| Component | | [wt.-%] |
| Monomer a) | 2-ethyl hexyl acrylate | 50.170 |
| Monomer b) | methyl methacrylate | 3.559 |
| | acrylic acid | 0.728 |
| | methacrylic acid | 0.443 |
| Monomer c) | MAPTMS | 0.012 |
| Chain Transfer Agent | N-dodecylmercaptane | 0.028 |
| Total Amount of Reactive Surfactants (25 wt.-% concentration) | | 7.105 |
| Initiator | azo-based radical | 0.057 |
| Water (Initiator) | | 0.249 |
| Water (Feed) | | 18.312 |
| Water (Reactor Charge) | | 18.925 |
| Anti-Coalescence Agent | ammonia | 0.362 |

Methacryloxypropyltrimethoxysilane (MAPTMS) (commercially obtained as KBM-503 from Shin-Etsu Chem.) was used as functional monomer enabling crosslinking by hydrolysis and condensation in presence of atmospheric moisture. N-dodecylmercaptan (n-DDM) was used as a chain transfer agent. VA-044, commercially obtained from Fujifilm Wako Chemicals, was used as an azo-based radical initiator.

As the anionic reactive surfactant, Hitenol® KH-1025, a polyoxyethylene-1-(allyloxymethyl) alkyl ether ammonium sulfate commercially available (in 25 wt.-% concentration) from Dai-ichi Kogyo Seiyaku (DKS) was used. As the non-ionic reactive surfactant in Examples 1, 2 and Comparative Example 2, Noigen® KN-2025, a polyoxyethylene nonyl propenyl phenyl ether-type surfactant commercially available (in 25 wt.-% concentration) from Dai-ichi Kogyo Seiyaku (DKS) was used. In Examples 3 and 5, Maxemul™ 5010, a polyoxyethylene alkylphenyl ether-type surfactant commercially available from Croda was used as the non-ionic reactive surfactant (in 25 wt.-% concentration). In Example 4, Maxemul™ 5011, a polyoxyethylene alkylphenyl ether-type surfactant commercially available from Croda was used as the non-ionic reactive surfactant (in 25 wt.-% concentration).

In each sample, the total content of the anionic reactive surfactant and the non-ionic reactive surfactant was 3.2 parts by weight relative to 100 parts by weight of all acrylate monomers constituting the acrylic emulsion-based polymer.

In Example 1, the anionic reactive surfactant was used in a content of 1.3 parts by weight, and the non-ionic reactive was used in a content of 1.9 parts by weight, each relative to 100 parts by weight of all acrylate monomers constituting the acrylic emulsion-based polymer (weight ratio of anionic reactive surfactant to non-ionic reactive surfactant of 60:40). In Example 2, the anionic reactive surfactant was used in a content of 1.9 parts by weight, and the non-ionic reactive was used in a content of 1.3 parts by weight, each relative to 100 parts by weight of all acrylate monomers constituting the acrylic emulsion-based polymer (weight ratio of anionic reactive surfactant to non-ionic reactive surfactant of 40:60).

In Comparative Example 1, no non-ionic reactive surfactant was added, whereas in Comparative Example 2, the anionic reactive surfactant was omitted.

The phases were homogenized for 15 min at 7000 rpm with an Ultra-Turrax T50 homogenizer.

The emulsion polymerization was conducted in a semi-batch process with no reacting monomer initially present in the reactor. The reactor was purged with nitrogen ($N_2$) for 1 h before the addition of the initiator. The initiator solution was added once the temperature reached the set temperature of 60°C. The monomer feed started 10 min after the initiator solution was added to the reactor, whereupon the reactor was maintained at 60°C during the polymerization under $N_2$ atmosphere. The monomer feed was continuously purged with $N_2$ and fed into the reactor for 5h until the feed was depleted. The temperature was then raised to 65°C for 5 h to age the polymer and reduce the amount of residual monomers. Ammonia solution was added after ageing to stabilize polymer particles against coalescence.

Upon preparation of the compositions described above, 1 pt. per weight of a rheology modifier (Rheovis AS1125, commercially obtained from BASF) relative to 100 parts by weight of the emulsion-based polymers was added to increase the final adhesive viscosity of the PSA composition.

PSA Tape Preparation

Double-sided adhesive tapes were prepared, the construction of which is illustrated in Fig. 2. The acrylic adhesive compositions described above constituted both adhesive sides of the tape with a thickness of 65 μm each (65 g/$m^2$). A non-woven paper fabric with a thickness of 30 μm (13 g/$m^2$) was used as a carrier layer, while a siliconized paper with a thickness of 125 μm (122 g/$m^2$) was used as liner to protect the adhesive side and enable release before application. The total thickness of each double-sided adhesive tape (without liner) was 140 μm ± 5 μm.

Peel Retention under High Humidity Conditions

To test the peel retention in a high humidity environment, the double-sided adhesive tapes described above were laminated with a 23 μm backing on different substrates (i.e. polypropylene (PP) with 20% talc and bright annealed steel (BA-steel)). Whereas PP/20% talc is a common engineered plastic used in car body parts in the automotive industry, BA-steel is a substrate used to facilitate the general comparison of tape performance. After 15 minutes, the initial peel force was measured at 50 mm/min. The tape-substrate complexes were conditioned for 24 hours in a condensation chamber at 60°C and 95%RH. Once the 24 hours passed, the tape-substrate complexes were left for 2 hours at 23°C and 50%RH, whereupon the same peel test was conducted.

A Zwick Roell Z2.5 tensiometer in tensile mode was used to measure the peel adhesion force of the double-sided adhesive tapes on the two solid substrates. Double-sided adhesive tapes with dimensions of 100 mm by 20 mm were used as samples and laminated on 23 μm polyethylene terephtalate (PET) strips. The DST-PET complexes were applied on the substrates and laminated by rolling a 5 kg rubber roller twice (one time back, one time forth). The conditioning time for the tapes on the substrates was 15 minutes at 23°C and 50%RH. The PET backings were fixed in the upper clamp of the apparatus and the DST-PET complexes were maintained at an angle of 90° during the peel test (Fig. 3). The upper clamp was then moved 30 mm upward at a speed of 50 mm/min. Each measurement was done in triplicate.

After the initial peel test, the PET-backing was maintained at a 90° angle to provide an opening at the peel front, in order to expose the adhesive to humidity, enabling water to form a condensation layer at the opening and penetrate the adhesive-substrate interface (see Fig. 4B). This setup was placed as such in the condensation chamber at 60°C at 95%RH for 24 hours. Afterwards, the substrates with the double-sided adhesive tapes laminated thereon were left to rest for 2

hours at 23°C 50%RH before measuring the final peel value (see Fig. 4A). The final peel value was measured in the same manner as the initial peel value.

If the final peel value is higher than the initial peel value, the double-sided adhesive tape can be considered to exhibit excellent humidity resistance and to maintain its peel retention under high humidity. For further specification, the peel retention under high humidity or humidity resistance may be characterized by the following relationship:

$$Peel\ retention\ under\ high\ humidity\ (\%) = \frac{average(final\ peel\ value)}{average(initial\ peel\ value)} \times 100\%$$

A double-sided adhesive tape maintains its peel retention under humidity resistance if the value is above 100%. A value below 100% indicates that the double-sided adhesive tape is sensitive to humidity. If the value is below 50%, the humidity resistance of the double-sided adhesive tape is deemed inacceptable.

Mechanical Stability Under Shear

Undesirable coagulation or gel formation can disrupt the coating process by blocking the flow of adhesive and thus entirely stop the industrial production process. Therefore, the resistance to shear of the adhesive compositions or their capability to sustain high shear (which is typically used during the coating process of the adhesive) without coagulation or formation of gel particles was tested in accordance with the stability test disclosed in S. H. Maron and I. N. Ulevich, Mechanical Stability Test for Rubber Latices, Analytical Chemistry 1953, 25(7), 1087-1091.

The test involved applying a fixed rotating shear stress via a press drill to a fixed amount of adhesive (see Fig. 5). The wet adhesive amount was selected so the dry adhesive content was equal to 20 g. The tests started by adding the adhesive to the cup, lowering the head onto the cup containing the adhesive until the scale registers a load of 10 kg, and locking the drill press in this position. The motor, set for 500 rpm, was then started and allowed to run for 5 minutes. The cup and adhesives were then removed from the press, the respective latex was filtered through a mesh of nylon (200 μm). Any coagulum formed was washed with water until free from latex, transferred onto the nylon mesh, dried for 1 hour at 130° C in an oven, and weighed. The weight of coagulum obtained under specified conditions was used to express the mechanical stability of the adhesive (in %). For the adhesive to be deemed stable under high mechanical shear, a coagulum level lower than 0.1% was desired.

Results and Discussion

The performance results of the adhesive compositions and double-sided tapes in accordance to Examples 1 to 5 and Comparative Examples 1 and 2 are shown in Table 2 below:

Examples 1 to 5, which represent compositions and tapes according to the present invention, were demonstrated to exhibit excellent humidity resistance (peel retention) while maintaining favourably high colloidal stability under shear. Comparative Example 1 prepared without addition of a non-ionic reactive surfactant was shown to exhibit a poor peel retention performance (< 50% after the humidity test). As is demonstrated by Examples 2 and 5, addition of non-ionic surfactant improves the peel retention (> 50%), and although the final value after the mechanical stability test is still lower than the initial value (< 100%) the properties under shear are still acceptable. Comparative Example 2, wherein only the non-ionic surfactant was used to stabilize the polymer particles exhibited excellent peel retention (> 100% of the initial peel value). However, the colloidal stability under shear was determined to be poor in absence of the anionic surfactant.

TABLE 2: Results of the Peel Retention and Mechanical Stability Tests

| | Example 1 | Example 2 | Example 3 | Example 4 | Example 5 | Comparative Example 1 | Comparative Example 2 |
|---|---|---|---|---|---|---|---|
| anionic reactive surfactant (wt.-% relative to total weight of surfactants) | 40 | 60 | 50 | 50 | 75 | 100 | 0 |

(continued)

| | Example 1 | Example 2 | Example 3 | Example 4 | Example 5 | Comparative Example 1 | Comparative Example 2 |
|---|---|---|---|---|---|---|---|
| non-ionic reactive surfactant (wt.-% relative to total weight of surfactants) | 60 | 40 | 50 | 50 | 25 | 0 | 100 |
| Peel retention performance* (on PP/20% talc) | ++ | + | ++ | ++ | + | - | ++ |
| Mechanical stability under shear** | ++ | ++ | ++ | ++ | ++ | + | - |

* ++ : peel retention ≥ 100%
+ : 50% < peel retention < 100%
- : peel retention on PP < 50%

** ++ : Maron test coagulum ≤ 0.03%
+ : 0.03% < Maron test coagulum < 0.1 %
- : Maron test coagulum ≥ 0.1%

In conclusion, the above results demonstrate that the present invention provides an adhesive composition that maintains high adhesion and peel retention properties on engineered plastic surfaces under high humidity conditions, and which may be produced in an environmentally sustainable and simple manner.

Once given the above disclosure, many other features, modifications, and improvements will become apparent to the skilled artisan.

Reference Numerals

1: carrier layer
2: adhesive layer
3: substrate
11: release liner
12: first adhesive layer
13: carrier layer
14: second adhesive layer

**Claims**

**1.** Acrylic emulsion-based polymer obtainable by emulsion polymerization of one or more acrylate monomers in the presence of an anionic reactive surfactant and a non-ionic reactive surfactant, so that the surfactants are covalently bound to the surface of the acrylic emulsion-based polymer via their reactive moieties;

wherein a total content of the anionic reactive surfactant and the non-ionic reactive surfactant ranges from 1.0 to 10 parts by weight relative to 100 parts by weight of all acrylate monomers constituting the acrylic emulsion-based polymer;
wherein the one or more acrylate monomers comprise:

a) an alkyl (meth)acrylate having an alkyl group with 2 to 14 carbon atoms,
b) at least one $\alpha,\beta$-ethylenically unsaturated, carboxyl group-containing monomer other than component a), selected from an $\alpha,\beta$-ethylenically unsaturated carboxylic acid and an alkyl (meth)acrylate having an alkyl group with less than 4 carbon atoms, and

c) an alkoxysilyl group-containing monomer; and

wherein each of the anionic reactive surfactant and the non-ionic reactive surfactant comprises a hydrophobic moiety, a hydrophilic moiety and the reactive moiety.

**2.** The acrylic emulsion-based polymer according to claim 1, wherein the total content of the anionic reactive surfactant and the non-ionic reactive surfactant ranges from 1.0 to 6.0 parts by weight relative to 100 parts by weight of all acrylate monomers constituting the acrylic emulsion-based polymer, preferably from 1.0 to 5 parts per weight, and more preferably from 2.0 to 4.5 parts by weight.

**3.** The acrylic emulsion-based polymer according to any one of claims 1 or 2, wherein a weight ratio of anionic reactive surfactant to non-ionic reactive surfactant is within the range of from 5:95 to 95:5, preferably from 15:85 to 80:20, more preferably from 20:80 to 65:35, and especially preferably from 30:70 to 60:40.

**4.** The acrylic emulsion-based polymer according to any one of claims 1 to 3, wherein the anionic reactive surfactant and the non-ionic reactive surfactant do not act as co-polymerizable monomers (surfmers) during emulsion polymerization.

**5.** The acrylic emulsion-based polymer according to any one of claims 1 to 4, wherein the reactive moieties are independently selected from groups comprising ethylenically unsaturated bonds, and wherein the reactive groups are preferably selected from maleic anhyride, allylic or methallylic groups.

**6.** The acrylic emulsion-based polymer according to any one of claims 1 to 5, wherein the hydrophobic moiety is selected from a hydrocarbon, fluorocarbon or siloxane group, and/or wherein the hydrophilic moiety comprises a poly(ethylene oxide) group.

**7.** The acrylic emulsion-based polymer according to any one of claims 1 to 6, wherein the anionic reactive surfactant comprises an anionic group selected from a sulfate group, a sulfonate group, a phosphate ester group and a carboxylate group.

**8.** The acrylic emulsion-based polymer according to any one of claims 1 to 7,

wherein the at least one $\alpha,\beta$-ethylenically unsaturated, carboxyl group-containing monomer other than component a) is selected from at least methyl methacrylate, acrylic acid, methacrylic acid, and combinations thereof; and/or
wherein the alkoxysilyl group-containing monomer is selected from an alkoxysilyl group-containing acrylate monomer or an alkoxysilyl-group containing vinyl monomer.

**9.** The acrylic emulsion-based polymer according to any one of claims 1 to 8, wherein the acrylic emulsion-based polymer comprises a chain transfer agent in an amount of 0.001 to 0.3 parts by weight with respect to 100 parts by weight of all acrylate monomers constituting the acrylic emulsion-based polymer, preferably between 0.02 to 0.1 parts by weight.

**10.** The acrylic emulsion-based polymer according to claim 8, wherein the amount of component a) is between 60 to 97 parts by weight with respect to 100 parts by weight of all acrylate monomers constituting the acrylic emulsion-based polymer, the (total) amount of component(s) b) is between 2 to 40 parts by weight with respect to 100 parts by weight of the total amount of monomer components, and the amount of component c) is between 0.001 to 1 parts by weight with respect to 100 parts by weight of all acrylate monomers constituting the acrylic emulsion-based polymer.

**11.** The acrylic emulsion-based polymer according to any one of claims 1 to 10, wherein the acrylic polymer has a weight-average molecular weight ($M_w$) measured by gel permeation chromatography (GPC) in the range of more than 200 kDa and 1000 kDa or less.

**12.** Acrylic pressure-sensitive adhesive composition comprising an acrylic emulsion-based polymer according to any one of claims 1 to 11.

**13.** Use of the acrylic pressure-sensitive adhesive composition according to claim 12 for application on engineering plastic surfaces.

**14.** Method of manufacturing a pressure-sensitive adhesive composition comprising an acrylic emulsion-based polymer, comprising a step of subjecting a monomer mixture comprising at least one acrylate monomer to emulsion polymerization in the presence of an anionic reactive surfactant and a non-ionic reactive surfactant so as to covalently bond at least a part of both surfactants to the surface of the acrylic emulsion-based polymer via their reactive moieties;

wherein a total content of the anionic reactive surfactant and the non-ionic reactive surfactant ranges from 1.0 to 10 parts by weight relative to 100 parts by weight of all acrylate monomers constituting the acrylic emulsion-based polymer;
wherein the one or more acrylate monomers comprise:

a) an alkyl (meth)acrylate having an alkyl group with 2 to 14 carbon atoms,
b) at least one α,β-ethylenically unsaturated, carboxyl group-containing monomer other than component a), selected from an α,β-ethylenically unsaturated carboxylic acid and an alkyl (meth)acrylate having an alkyl group with less than 4 carbon atoms, and
c) an alkoxysilyl group-containing monomer; and

wherein each of the anionic reactive surfactant and the non-ionic reactive surfactant comprises a hydrophobic moiety, a hydrophilic moiety and the reactive moiety.

**15.** Pressure-sensitive adhesive tape comprising an adhesive layer on at least one surface of a carrier layer and an optional release liner provided on the adhesive layer, wherein the adhesive layer comprises the acrylic pressure-sensitive adhesive composition according to claim 12.

## Patentansprüche

**1.** Polymer auf der Basis einer Acrylemulsion, erhältlich durch Emulsionspolymerisation eines oder mehrerer Acrylatmonomere in Gegenwart eines anionischen und eines nichtionischen reaktiven Tensids, wobei die Tenside über ihre reaktiven Reste kovalent an die Oberfläche des Polymers auf der Basis einer Acrylemulsion gebunden sind;

wobei der Gesamtgehalt an anionischen reaktiven Tensiden und nichtionischen reaktiven Tensiden zwischen 1,0 und 10 Gewichtsteilen, bezogen auf 100 Gewichtsteile aller das Polymer auf der Basis einer Acrylemulsion bildenden Acrylatmonomere, liegt;
wobei die ein oder mehreren Acrylatmonomere Folgendes umfassen:

a) ein Alkyl(meth)acrylat mit einer Alkylgruppe mit 2 bis 14 Kohlenstoffatomen,
b) mindestens ein α,β-ethylenisch ungesättigtes, Carboxylgruppen-haltiges Monomer, das nicht unter Komponente a) fällt und aus einer α,β-ethylenisch ungesättigten Carbonsäure und einem Alkyl(meth)acrylat mit einer Alkylgruppe mit weniger als 4 Kohlenstoffatomen ausgewählt ist, und
c) ein Alkoxysilylgruppen-haltiges Monomer; und

wobei jedes der anionischen reaktiven Tenside und jedes der nichtionischen reaktiven Tenside einen hydrophoben Rest, einen hydrophilen Rest und den reaktiven Rest umfasst.

**2.** Das Polymer auf der Basis einer Acrylemulsion nach Anspruch 1, wobei der Gesamtgehalt an anionischem und nichtionischem reaktivem Tensid 1,0 bis 6,0 Gewichtsteile, bezogen auf 100 Gewichtsteile aller das Polymer auf der Basis einer Acrylemulsion bildenden Acrylatmonomere, beträgt, vorzugsweise 1,0 bis 5 Gewichtsteile und besonders bevorzugt 2,0 bis 4,5 Gewichtsteile.

**3.** Das Polymer auf der Basis einer Acrylemulsion nach einem der Ansprüche 1 oder 2, wobei das Gewichtsverhältnis von anionischem reaktiven Tensid zu nichtionischem reaktivenTensid im Bereich von 5:95 bis 95:5, vorzugsweise 15:85 bis 80:20, besonders bevorzugt 20:80 bis 65:35 und besonders bevorzugt 30:70 bis 60:40 liegt.

**4.** Das Polymer auf der Basis einer Acrylemulsion nach einem der Ansprüche 1 bis 3, wobei das anionische reaktive Tensid und das nichtionische reaktive Tensid während der Emulsionspolymerisation nicht als copolymerisierbare Monomere (Surfmere) fungieren.

**5.** Das Polymer auf der Basis einer Acrylemulsion nach einem der Ansprüche 1 bis 4, wobei die reaktiven Reste

unabhängig voneinander aus Gruppen mit ethylenisch ungesättigten Bindungen ausgewählt sind und wobei die reaktiven Reste vorzugsweise aus Maleinsäureanhydrid-, Allyl- oder Methallylgruppen ausgewählt sind.

**6.** Das Polymer auf der Basis einer Acrylemulsion nach einem der Ansprüche 1 bis 5, wobei der hydrophobe Rest aus einer Kohlenwasserstoff-, Fluorkohlenstoff- oder Siloxangruppe ausgewählt ist und/oder wobei der hydrophile Rest eine Polyethylenoxidgruppe umfasst.

**7.** Das Polymer auf der Basis einer Acrylemulsion nach einem der Ansprüche 1 bis 6, wobei das anionische reaktive Tensid eine anionische Gruppe umfasst, die aus einer Sulfatgruppe, einer Sulfonatgruppe, einer Phosphatestergruppe oder einer Carboxylatgruppe ausgewählt ist.

**8.** Das Polymer auf der Basis einer Acrylemulsion nach einem der Ansprüche 1 bis 7,

wobei das mindestens eine α,β-ethylenisch ungesättigte, Carboxylgruppen-haltige Monomer, das nicht unter Komponente a) fällt, ausgewählt ist aus mindestens Methylmethacrylat, Acrylsäure, Methacrylsäure und Kombinationen davon; und/oder
wobei das Alkoxysilylgruppen-haltige Monomer ausgewählt ist aus einem Alkoxysilylgruppen-haltigen Acrylatmonomer oder einem Alkoxysilylgruppen-haltigen Vinylmonomer.

**9.** Das Polymer auf der Basis einer Acrylemulsion nach einem der Ansprüche 1 bis 8, wobei das Polymer auf der Basis einer Acrylemulsion ein Kettenübertragungsmittel in einer Menge von 0,001 bis 0,3 Gewichtsteilen, bezogen auf 100 Gewichtsteile aller das Polymer auf der Basis einer Acrylemulsion bildenden Acrylatmonomere, enthält, vorzugsweise zwischen 0,02 und 0,1 Gewichtsteilen.

**10.** Das Polymer auf der Basis einer Acrylemulsion nach Anspruch 8, wobei die Menge der Komponente a) zwischen 60 und 97 Gewichtsteilen bezogen auf 100 Gewichtsteile aller das Polymer auf der Basis einer Acrylemulsion bildenden Acrylatmonomere liegt, die (Gesamt-)Menge der Komponente(n) b) zwischen 2 und 40 Gewichtsteilen bezogen auf 100 Gewichtsteile aller das Polymer auf der Basis einer Acrylemulsion bildenden Acrylatmonomere liegt, und die Menge der Komponente c) zwischen 0,001 und 1 Gewichtsteil bezogen auf 100 Gewichtsteile aller das Polymer auf der Basis einer Acrylemulsion bildenden Acrylatmonomere liegt.

**11.** Das Polymer auf der Basis einer Acrylemulsion nach einem der Ansprüche 1 bis 10, wobei das Acrylpolymer ein mittels Gelpermeationschromatographie (GPC) bestimmtes gewichtsmittleres Molekulargewicht ($M_w$) im Bereich von mehr als 200 kDa und 1000 kDa oder weniger aufweist.

**12.** Acryl-Haftklebstoffzusammensetzung, umfassend ein Polymer auf der Basis einer Acrylemulsion nach einem der Ansprüche 1 bis 11.

**13.** Verwendung der Acryl-Haftklebstoffzusammensetzung nach Anspruch 12 zur Anwendung auf technischen Kunststoffoberflächen.

**14.** Verfahren zur Herstellung einer Haftklebstoffzusammensetzung, umfassend ein Polymer auf der Basis einer Acrylemulsion, umfassend einen Schritt der Emulsionspolymerisation eines Monomergemisches, das mindestens ein Acrylatmonomer enthält, in Gegenwart eines anionischen reaktiven Tensids und eines nichtionischen reaktiven Tensids, um mindestens einen Teil beider Tenside über ihre reaktiven Gruppen kovalent an die Oberfläche des Polymers auf der Basis einer Acrylemulsion zu binden;

wobei der Gesamtgehalt des anionischen reaktiven Tensitds und des nichtionischen reaktiven Tensids zwischen 1,0 und 10 Gewichtsteilen bezogen auf 100 Gewichtsteile aller das Polymer auf der Basis einer Acrylemulsion bildenden Acrylatmonomere liegt;
wobei die ein oder mehreren Acrylatmonomere Folgendes umfassen:

a) ein Alkyl(meth)acrylat mit einer Alkylgruppe mit 2 bis 14 Kohlenstoffatomen,
b) mindestens ein α,β-ethylenisch ungesättigtes, Carboxylgruppen-haltiges Monomer, das nicht unter Komponente a) fällt und aus einer α,β-ethylenisch ungesättigten Carbonsäure und einem Alkyl(meth)acrylat mit einer Alkylgruppe mit weniger als 4 Kohlenstoffatomen ausgewählt ist, und
c) ein Alkoxysilylgruppen-haltiges Monomer; und

wobei jedes der anionischen reaktiven Tenside und jedes der nichtionischen reaktiven Tenside einen hydrophoben Rest, einen hydrophilen Rest und den reaktiven Rest umfasst.

**15.** Haftklebeband, umfassend eine Klebeschicht auf mindestens einer Oberfläche einer Trägerschicht und eine optionale Trennfolie auf der Klebeschicht, wobei die Klebeschicht die Acryl-Haftklebstoffzusammensetzung nach Anspruch 12 umfasst.

**Revendications**

**1.** Polymère à base d'émulsion acrylique pouvant être obtenu par polymérisation en émulsion d'un ou de plusieurs monomères d'acrylates en présence d'un tensioactif réactif anionique et d'un tensioactif réactif non ionique, de façon à ce que les tensioactifs soient liés par covalence à la surface du polymère à base d'émulsion acrylique par l'intermédiaire de leurs groupements réactifs ;

dans lequel une teneur totale en tensioactif réactif anionique et en tensioactif réactif non ionique est comprise entre 1,0 et 10 parties en poids pour 100 parties en poids de tous les monomères d'acrylates constituant le polymère à base d'émulsion acrylique ;
dans lequel lesdits un ou plusieurs monomères d'acrylates comprennent :

a) un (méth)acrylate d'alkyle comportant un groupe alkyle avec 2 à 14 atomes de carbone,
b) au moins un monomère contenant un groupe carboxyle, $\alpha,\beta$-éthyléniquement insaturé autre que le composant a), choisi parmi un acide carboxylique $\alpha,\beta$-éthyléniquement insaturé et un (méth)acrylate d'alkyle comportant un groupe alkyle avec moins de 4 atomes de carbone, et
c) un monomère contenant un groupe alcoxysilyle ; et

dans lequel chacun parmi le tensioactif réactif anionique et le tensioactif réactif non ionique comprend un groupement hydrophobe, un groupement hydrophile et le groupement réactif.

**2.** Polymère à base d'émulsion acrylique selon la revendication 1, dans lequel la teneur totale en tensioactif réactif anionique et en tensioactif réactif non ionique est comprise entre 1,0 et 6,0 parties en poids pour 100 parties en poids de tous les monomères d'acrylates constituant le polymère à base d'émulsion acrylique, de préférence entre 1,0 et 5 parties en poids, et plus préférentiellement entre 2,0 et 4,5 parties en poids.

**3.** Polymère à base d'émulsion acrylique selon l'une quelconque des revendications 1 ou 2, dans lequel un rapport pondéral du tensioactif réactif anionique au tensioactif réactif non ionique se situe dans la plage de 5:95 à 95:5, de préférence de 15:85 à 80:20, plus préférentiellement de 20:80 à 65:35, et tout particulièrement préférentiellement de 30:70 à 60:40.

**4.** Polymère à base d'émulsion acrylique selon l'une quelconque des revendications 1 à 3, dans lequel le tensioactif réactif anionique et le tensioactif réactif non ionique n'agissent pas comme des monomères copolymérisables (surfmères) au cours de la polymérisation en émulsion.

**5.** Polymère à base d'émulsion acrylique selon l'une quelconque des revendications 1 à 4, dans lequel les groupements réactifs sont indépendamment choisis parmi les groupes comprenant des liaisons éthyléniquement insaturées, et dans lequel les groupes réactifs sont de préférence choisis parmi l'anhyride maléique, les groupes allyliques ou méthallyliques.

**6.** Polymère à base d'émulsion acrylique selon l'une quelconque des revendications 1 à 5, dans lequel le groupement hydrophobe est choisi parmi un groupe hydrocarboné, fluorocarboné ou siloxane, et/ou dans lequel le groupement hydrophile comprend un groupe poly(oxyde d'éthylène).

**7.** Polymère à base d'émulsion acrylique selon l'une quelconque des revendications 1 à 6, dans lequel le tensioactif réactif anionique comprend un groupe anionique choisi parmi un groupe sulfate, un groupe sulfonate, un groupe ester de phosphate et un groupe carboxylate.

**8.** Polymère à base d'émulsion acrylique selon l'une quelconque des revendications 1 à 7,

dans lequel ledit au moins un monomère contenant un groupe carboxyle, α,β-éthyléniquement insaturé autre que le composant a) est choisi parmi au moins le méthacrylate de méthyle, l'acide acrylique, l'acide méthacrylique, et les combinaisons de ceux-ci ; et/ou

dans lequel le monomère contenant un groupe alcoxysilyle est choisi parmi un monomère d'acrylate contenant un groupe alcoxysilyle ou un monomère de vinyle contenant un groupe alcoxysilyle.

**9.** Polymère à base d'émulsion acrylique selon l'une quelconque des revendications 1 à 8, dans lequel le polymère à base d'émulsion acrylique comprend un agent de transfert de chaîne en une quantité de 0,001 à 0,3 parties en poids pour 100 parties en poids de tous les monomères d'acrylates constituant le polymère à base d'émulsion acrylique, de préférence entre 0,02 et 0,1 parties en poids.

**10.** Polymère à base d'émulsion acrylique selon la revendication 8, dans lequel la quantité de composant a) est comprise entre 60 et 97 parties en poids pour 100 parties en poids de tous les monomères d'acrylates constituant le polymère à base d'émulsion acrylique, la quantité (totale) de composant(s) b) est comprise entre 2 et 40 parties en poids pour 100 parties en poids de la quantité totale de composants monomères, et la quantité de composant c) est comprise entre 0,001 et 1 parties en poids pour 100 parties en poids de tous les monomères d'acrylates constituant le polymère à base d'émulsion acrylique.

**11.** Polymère à base d'émulsion acrylique selon l'une quelconque des revendications 1 à 10, dans lequel le polymère acrylique a une masse moléculaire moyenne en poids ($M_w$) mesurée par chromatographie par perméation sur gel (CPG) dans la plage comprise entre plus de 200 kDa et 1000 kDa ou moins.

**12.** Composition acrylique adhésive sensible à la pression comprenant un polymère à base d'émulsion acrylique selon l'une quelconque des revendications 1 à 11.

**13.** Utilisation de la composition acrylique adhésive sensible à la pression selon la revendication 12 pour application sur des surfaces plastiques techniques.

**14.** Procédé de fabrication d'une composition acrylique adhésive sensible à la pression comprenant un polymère à base d'émulsion acrylique, comprenant une étape consistant à soumettre un mélange de monomères comprenant au moins un monomère d'acrylate à une polymérisation en émulsion en présence d'un tensioactif réactif anionique et d'un tensioactif réactif non ionique de façon à lier par covalence au moins une partie des deux tensioactifs à la surface du polymère à base d'émulsion acrylique par l'intermédiaire de leurs groupements réactifs ;

dans lequel une teneur totale en tensioactif réactif anionique et en tensioactif réactif non ionique est comprise entre 1,0 et 10 parties en poids pour 100 parties en poids de tous les monomères d'acrylates constituant le polymère à base d'émulsion acrylique ;

dans lequel lesdits un ou plusieurs monomères d'acrylates comprennent :

a) un (méth)acrylate d'alkyle comportant un groupe alkyle avec 2 à 14 atomes de carbone,

b) au moins un monomère contenant un groupe carboxyle, α,β-éthyléniquement insaturé autre que le composant a), choisi parmi un acide carboxylique α,β-éthyléniquement insaturé et un (méth)acrylate d'alkyle comportant un groupe alkyle avec moins de 4 atomes de carbone, et

c) un monomère contenant un groupe alcoxysilyle ; et

dans lequel chacun parmi le tensioactif réactif anionique et le tensioactif réactif non ionique comprend un groupement hydrophobe, un groupement hydrophile et le groupement réactif.

**15.** Ruban adhésif sensible à la pression comprenant une couche adhésive sur au moins une surface d'une couche de support et une doublure antiadhésive optionnelle disposée sur la couche adhésive, dans lequel la couche adhésive comprend la composition acrylique adhésive sensible à la pression selon la revendication 12.

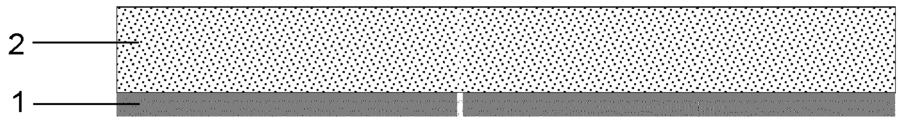


Fig. 1

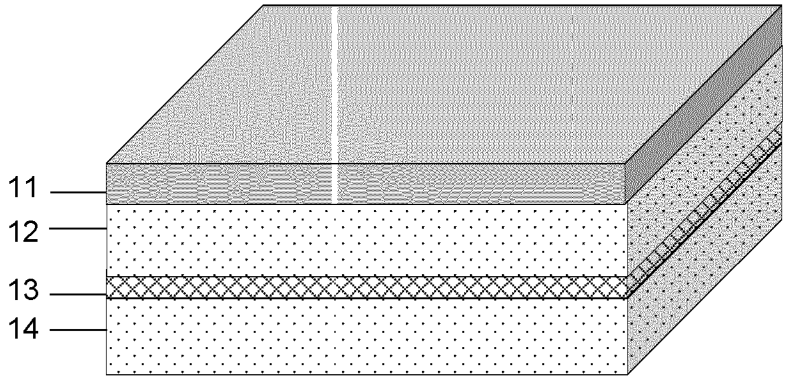


Fig. 2

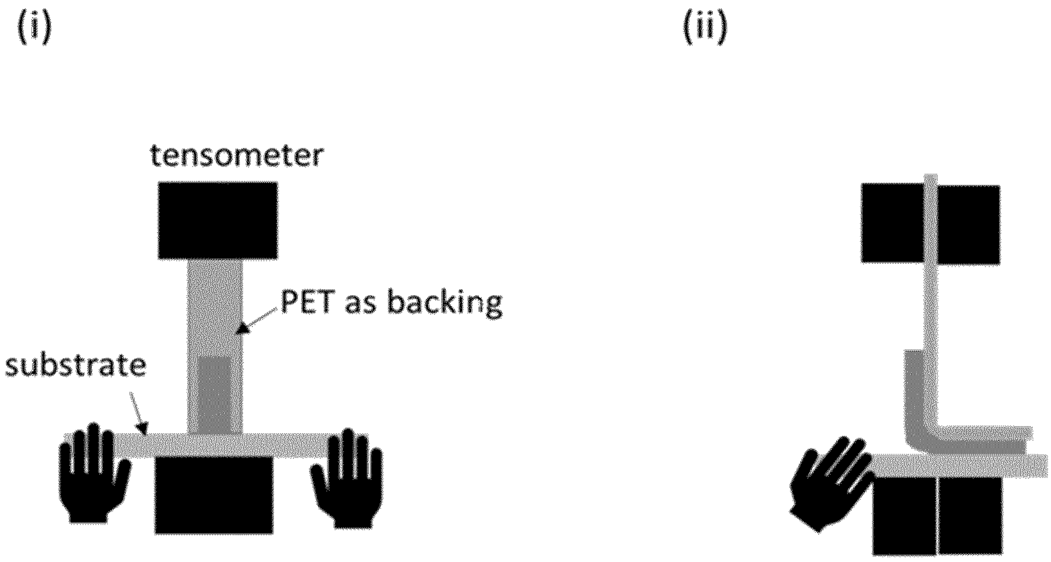


Fig. 3

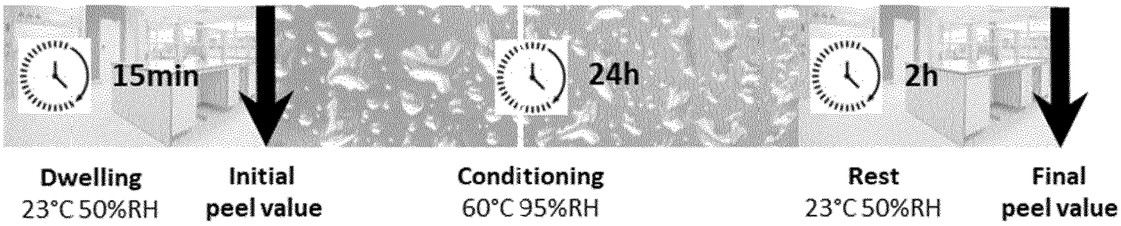
15min
24h
2h
Dwelling
23°C 50%RH
Initial
peel value
Conditioning
60°C 95%RH
Rest
23°C 50%RH
Final
peel value

Fig. 4A

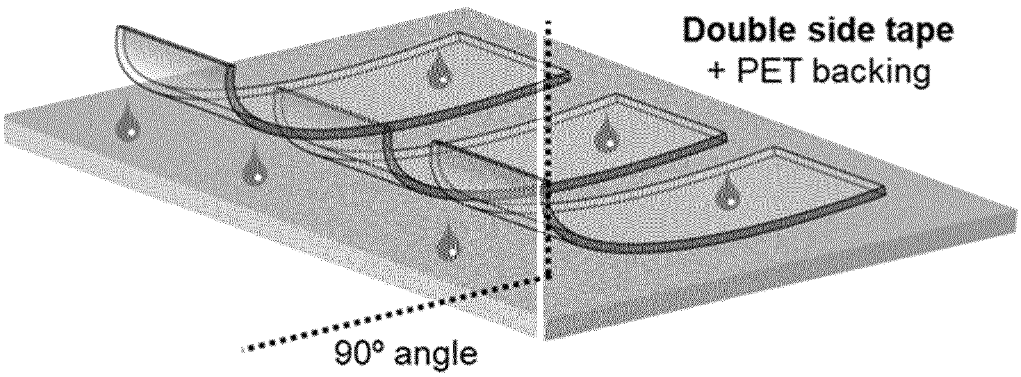
Double side tape
+ PET backing
90° angle

Fig. 4B

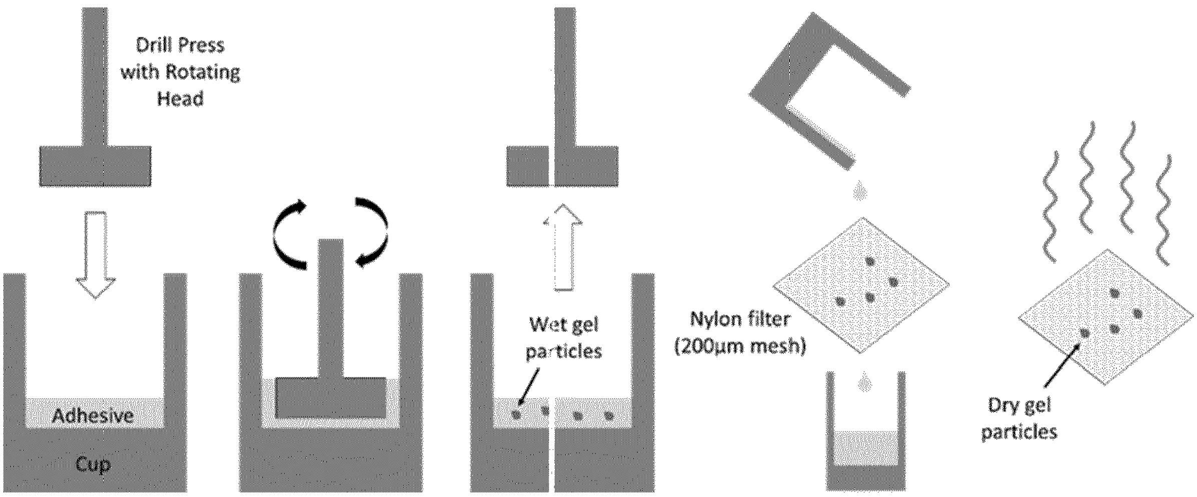
Drill Press
with Rotating
Head
Adhesive
Cup
Wet gel
particles
Nylon filter
(200μm mesh)
Dry gel
particles

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107602760 A
- CN 106519106 A
- US 20130052457 A1
- US 20140302314 A1
- CN 106939062 A
- CN 112724884 A
- CN 110606910 A
- CN 110437360 A
- US 2014114006 A1
- US 2013047892 A1
- JP 2596441 B


### Non-patent literature cited in the description


- **S. H. MARON** ; **I. N. ULEVICH**. Mechanical Stability Test for Rubber Latices. *Analytical Chemistry*, 1953, vol. 25 (7), 1087-1091